Europäisches Patentamt

(19) European Patent Office

Office européen des brevets

(11) Publication number: **0 230 673 B1**

## EUROPEAN PATENT SPECIFICATION

(45) Date of publication of patent specification: **30.10.91**  (51) Int. Cl.⁵: **G01M 15/00**

(21) Application number: **86118161.8**

(22) Date of filing: **30.12.86**

(54) Modal mass analysis method for exhaust gases from motorcars.

(30) Priority: **31.12.85 JP 298457/85**

(43) Date of publication of application:
**05.08.87 Bulletin 87/32**

(45) Publication of the grant of the patent:
**30.10.91 Bulletin 91/44**

(84) Designated Contracting States:
**DE GB**

(56) References cited:
**EP-A- 0 155 793**

(73) Proprietor: **HORIBA, LTD.**
**2 Miyanohigashi-machi Kissyoin**
**Minami-ku Kyoto(JP)**

(72) Inventor: **Mikasa, Hajime**
**1158-3, Katsube-cho**
**Moriyama-City Shiga-Prefecture(JP)**
Inventor: **Kitamura, Hideji**
**15 Go, 13 Ban, 1-cho Utajima**
**Nishiyodogawa-ku Osaka(JP)**

(74) Representative: **TER MEER - MÜLLER - STEIN-**
**MEISTER & PARTNER**
**Mauerkircherstrasse 45**
**W-8000 München 80(DE)**

## Description

The present invention relates to modal mass analysis for measuring the quantity of each specified ingredient gas (ingredients to be measured: CO, $CO_2$, $NO_x$, HC and the like) in the exhaust gas from a motorcar for various kinds of driving modes (idling driving, accelerating, constant-speed driving and decelerating). In particular, the invention relates to a modal mass analysis method for exhaust gases from motorcars on the basis of a procedure that the flow rate $Q_E(t)$ of the exhaust gas exhausted from a motorcar tested during driving simulation condition and based on an appointed driving-mode change-over sequence is measured in an appointed sampling time, and simultaneously, the concentration $C_E(t)$ of an ingredient gas in said exhaust gas is measured in the same sampling time, and then the quantity $M(t)$ of the ingredient to be measured in said exhaust gas is determined for each driving mode by the use of the following equation (1):

$$M(t) = \rho \times C_E(t) \times Q_E(t) \qquad (1)$$

wherein $\rho$ defines the density of the ingredient to be measured.

The following and other methods have been well known for such a modal mass analysis of exhaust gases from motorcars:

(I) A dilute stream method in which a flow rate (constant for each system) of an exhaust gas after dilution is used as the flow rate $Q_E(t)$ in said equation (1), and a measured result of the concentration of an ingredient to be measured in the exhaust gas after dilution is used as the concentration $C_E(t)$ of the ingredient gas in said equation (1).

(II) A $CO_2$-tracing method in which the flow rate $Q_E(t)$ of the exhaust gas in said equation (1) is determined by comparing the measured result of the concentration of $CO_2$ in a raw exhaust gas (before dilution) with the measured result of the concentration of $CO_2$ in the exhaust gas after dilution, and a measured result of the concentration of the ingredient gas in the raw exhaust gas is used as the concentration $C_E(t)$ of the ingredient for determining the respective exhaust gas ingredient quantity via equation (1).

(III) A dilution air quantity method in which the flow rate $Q_E(t)$ of the exhaust gas in said equation (1) is determined as a difference between a flow rate (constant for each system) of the exhaust gas after dilution and a measured result of the dilution air quantity, and the measured result of the concentration of the ingredient gas in the raw exhaust gas is used as the concentration $C_E(t)$ of the ingredient to be measured by using equation (1).

In every case, both the measurement of said flow rate $Q_E(t)$ of the exhaust gas and the measurement of the concentration for determining the concentration $C_E(t)$ of said ingredient gas have been carried out without a substantial delay relative to a changing-over point of time of each driving mode and in an appointed common sampling time.

However, the above described conventional methods have shown vital disadvantages explained in the following:

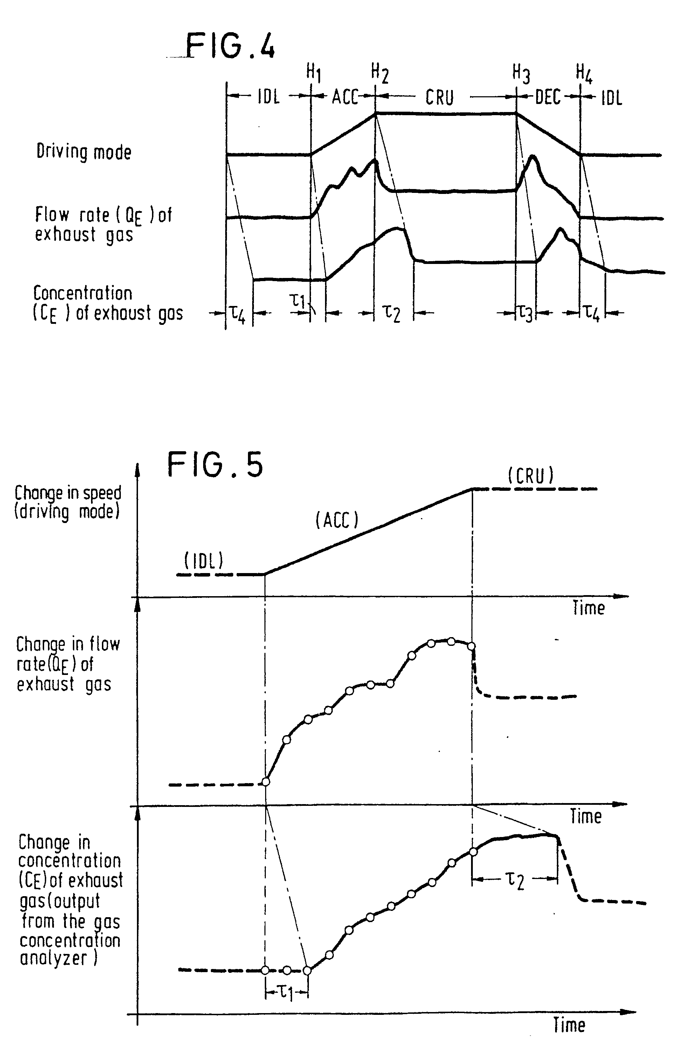

With reference to the accompanying drawings, Fig. 4 depicts a timing chart schematically showing driving modes

IDL (idling driving mode), ACC (accelerating driving mode), CRU (constant-speed driving mode), DEC (decelerating driving mode) which can be changed on the basis of an appointed sequence and a general state of changes of a flow rate $Q_E(t)$ of an exhaust gas from a motorcar measured and a concentration $C_E(t)$ of an ingredient to be measured in the exhaust gas in a real time in correspondence to the changing-over changes. As is obvious from this drawing, the flow rate $Q_E(t)$ of the exhaust gas is changing at each changing-over point of time $H_1$, $H_2$, $H_3$, $H_4$ of the driving modes nearly without any delay while the concentration $C_E(t)$ of the ingredient gas is changing with a certain delay time $\tau_1$, $\tau_2$, $\tau_3$, $\tau_4$ relative to each of said changing points $H_1$, $H_2$, $H_3$, $H_4$, respectively, due to a delay in response incidental to a pipe system and a gas-concentration analyzer, absorption and desorption phenomena of ingredient gases and the like. In addition, since each of said delay times $\tau_1$, $\tau_2$, $\tau_3$, $\tau_4$ are different for each of the driving modes and each of the ingredients to be measured, the data of said concentration $C_E(t)$ of the ingredient gas put out from a gas concentration analyzer in a real time have a form enlarged or compressed relatively to a time axis in each driving mode.

However, even though such a changing state of data is realistic, so far this phenomena has been disregarded. For example, both the measurement of the flow rate $Q_E(t)$ of the exhaust gas and the measurement of the concentration $C_E(t)$ of the ingredient gas have been carried out in a manner as shown by marks O in Fig. 5 (illustrating a case of the accelerating driving mode ACC). In short, as above

2

described, both the measurement of the flow rate $Q_E(t)$ of the exhaust gas and the measurement of the concentration $C_E(t)$ of the ingredient gas have been carried out under the condition or assumption of substantially no delay relative to a changing-point of time of each driving mode and during an appointed common sampling time, so that in each driving mode the sampling data of the concentration $C_E(t)$ of a needless or mistaken ingredient gas are mixed or the sampling data of the flow rate $Q_E(t)$ of the exhaust gas do not correspond to the sampling data of the concentration $C_E(t)$ at a ratio of 1 : 1 in phase and number. Accordingly, even in the case of an average value method in which the quantity M of an average ingredient gas is determined for each driving mode, an error of 20 to 30 % is produced. In addition, in the case of an instantaneous operational method, in which a quantity $M(t)$ of an ingredient gas to be measured exhaust in every time is successively determined, the disadvantage has occured that the error is still too large to accept the data obtained by this method.

However, recently improvements of motorcar performances required in view of the regulation in respect to tolerable exhaust gases, energy saving and the like have increasingly tightened up. In this sense, it has been eagerly desired to transfer said instantaneous operational method capable of investigating more in detail to practical use, i.e. improving the accuracy and simplifying the practical operation.

In view of the above described actual state, it is an object of the present invention to provide a comparatively simple modal mass analysis method for exhaust gases from a motorcar capable of measuring the quantity of an ingredient gas to be measured in an exhaust gas with high accuracy not only in a case of an average value method in which the quantity M of an average ingredient gas to be measured is determined for each driving mode by a comparatively simple operational method, but also in the case of an instantaneous operational method in which the quantity $M(t)$ of an ingredient gas to be measured exhausted in each time is successively determined.

In order to achieve the above described object, the modal mass analysis method for exhaust gases from motorcars by the fundamental procedure described in the beginning, according to the present invention, is characterized in that in order to make the flow rate $Q_E(t)$ of the exhaust gas used in said operation equation (1) to correspond with the concentration $C_E(t)$ of the ingredient gas to be measured as used in said operation equation (1) to a ratio of 1:1 for each driving mode, the sampling data of the flow rate $Q_E(t)$ of the exhaust gas obtained at the beginning of the measurement substantially without any delay relative to a changing-over point of time of each driving mode are used as said flow rate $Q_E(t)$ of the exhaust gas in said operation equation (1) as they are, while values obtained by delaying the beginning time of the measurement of the sampling of the concentration of the ingredient gas in each driving mode by an appointed time relative to a changing-over point of time for each driving mode are derived depending on the ingredient to be measured and the driving mode and simultaneously, the concentration $C_{E1}(t)$ of the ingredient gas corresponding to the sampling data of said flow rate $Q_E(t)$ of the exhaust gas in the same phase is determined on the basis of the sampling data $C_{ES}(t)$ of the concentration of the ingredient gas by interpolation, and then a concentration value $C_{E1}(t)$ is subjected to a concentration correction by data-compression or data-expansion based on the following operation equation (2)

$$C_E(t) = C_{E1}(t) \times N_C/N_Q, \qquad (2)$$

wherein $N_C$, $N_Q$ correspond to the numbers of samplings of $C_E(t)$, $Q_E(t)$ in each driving mode preliminary determined, respectively, and the resulting concentration $C_E(t)$ of the ingredient gas is used for determining the ingredient quantity $M(t)$ according to the operation equation (1).

With the method of the present invention, as further explained by the description of preferred embodiments later, since said flow rate $Q_E(t)$ of the exhaust gas used in said operation equation (1) is adapted to correspond to said concentration $C_E(t)$ of the ingredient gas used in said operation equation (1), said operation equation (1) being capable to determine an ever-changing quantity of the exhausted ingredient at a ratio of 1:1 in phase relation and number by setting a delay time from the beginning of the sampling of the data of the concentration of the ingredient gas, which is actually measured in an appointed sampling time, and simultaneously, subjecting the measured sampling data $C_{ES}(t)$ to a relatively simple operational correction applying an interpolation method and a data-compression method or a data-expansion method, the quantity $M(t)$ of the ingredient gas exhausted can be momentarily determined in remarkably high accuracy by said operation equation (1), whereby also the quantity M of the average ingredient gas exhausted in each driving mode can be determined in remarkably high accuracy on the basis of the operational result of said quantity $M(t)$. According to the presently available investigation results, it has been found that the error of measurement can be reduced from 20 to 30 % in the conventional analysis to 5 % with the modal mass analysis according to the present invention.

Thus, not only an average value of the quantity of the ingredient gas to be measured in the exhaust gas from a motorcar in each driving mode but also an ever-changing quantity of the ingredient gas in the exhaust gas from a motorcar can be measured with high accuracy, so that various kinds of performance of a motorcar under a transient driving condition can be investigated in details.

In addition, since the operational correction of said concentration $C_E(t)$ of the ingredient gas to be measured in the method according to the present invention is based on a relatively simple method, as above described, a calculating means of relatively small capacity is sufficient for the realization of said operational correction. This results in a remarkable cost advantage.

Furthermore, the method according to the present invention can be applied to every modal mass analysis such as the dilute stream methode, the $CO_2$-tracing method and the dilution air quantity method.

Preferred embodiments of the present invention will be described below with reference to the drawings in which

Fig. 1    is a general arrangement showing a modal mass analysis system, wherein the present invention is applied to the dilution-air quantity method;

Fig. 2    is a schematic timing chart for explaining the fundamental principle of the method of the present invention;

Fig. 3    is a diagram showing the principle of an ultrasonic flow meter;

Fig. 4    is a general schematic timing chart of various kinds of data already explained above and used for evaluating the quantity of the modal mass analysis; and

Fig. 5    is a schematic timing chart for explaining the conventional methods.

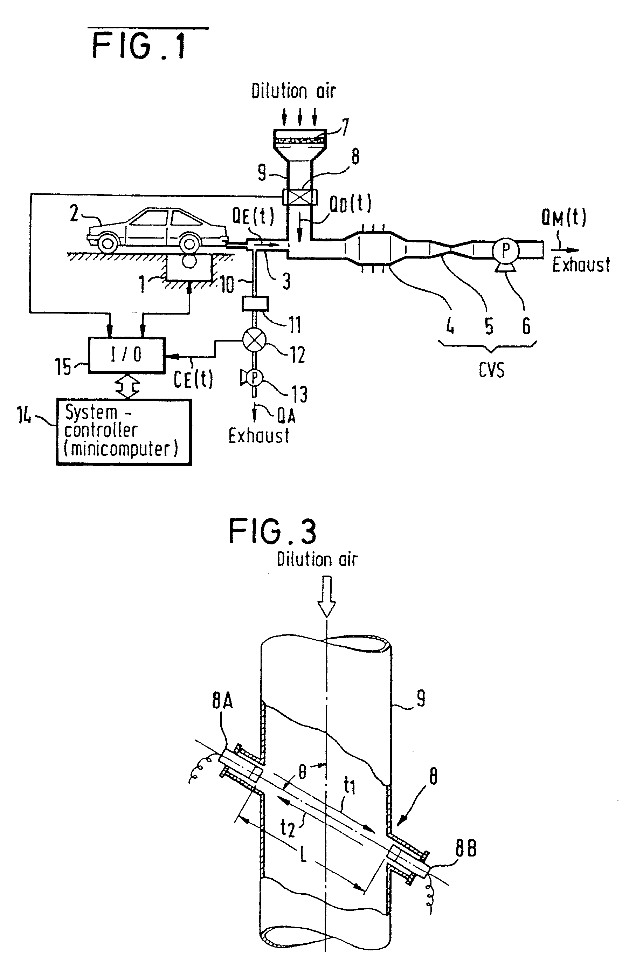

Fig. 1 shows an outline of the principal construction of a modal mass analysis system based on the dilution air quantity method as one example of a modal mass analysis system for the exhaust gases from a motorcar to which a method according to the present invention is applied.

Reference numeral 1 designates a chassis dynamometer as a motorcar-driving simulator adapted to be able to simulate various driving conditions of a motorcar on an actual road with standing car body by absorbing the force generated by a rolling stock 2. Chassis dynamometers of this type are known so that the description of its concrete construction can be omitted.

Said rolling stock 2 to be tested is driven in various kinds of driving modes, i. e. IDL (idling driving), ACC (accelerating), CRU (constant-speed) and DEC (decelarating) by said chassis dynamometer 1 on the basis of a predetermined sequence.

Reference numeral 3 designates an exhaust gas-inlet passage for introducing the exhaust gas exhausted from said rolling stock 2 to be tested, a constant-flow rate sampler CVS comprising a heat exchanger 4, a constant-flow rate Venturi portion 5, a constant-flow rate suction blower 6 and the like connected with said exhaust gas-inlet passage 3, and a dilution air-inlet passage 9 provided with a filter 7 and an ultrasonic flow meter 8 connected with a joint of said exhaust gas-inlet passage 3 and said constant-flow rate sampler CVS.

A sampling passage 10 for measuring the concentration of each of various kinds of specified ingredient gas (CO, $CO_2$, $NO_x$, HC and the like) branches from said exhaust gas-inlet passage 3. Said sampling passage 10, in series from an upstream side, is provided with a dehydrator 11 for dehydrating the exhaust gas at a specified temperature (for example 5°C), a concentration analyzer 12 for said various kinds of specified ingredient gas (an ingredient to be measured) and a constant-flow rate suction blower 13 in this order.

Reference numeral 14 designates a system controller (including a calculating means) implemented for example by a minicomputer and the like having a comparatively small capacity for operating said chassis dynamometer 1 and simultaneously, to carry out an operation treatment for determining the quantity of an ingredient gas in said exhaust gas for each driving mode on the basis of a measured result of flow rate by means of the ultrasonic flow meter 8 in said dilution air-inlet passage 9 and a measured result of concentration by means of said gas concentration analyzer 12. Further details will be described later. In addition, reference numeral 15 designates input/output (I/O) interfaces provided between the system controller 14 and said chassis dynamometer 1, said ultrasonic flow meter 8 and said gas concentration analyzer 12. Besides, although not shown, it goes without saying that said system controller 14 is provided or connected with a control panel, a display device, a recorder, a memory device and the like.

The principle of the operational treatment practically carried out by said system controller 14 for determining the quantity (mass) of the ingredient to be measured in the exhaust gas, i.e. the principle of the modal mass analysis of an exhaust gas from a motorcar according to the present invention will be described next.

As shown in Fig. 1, provided that the flow rate of an exhaust gas sucked into the sampling passage 10 for measuring a concentration is $Q_A$ (constant), a quantity of diluting air measured by the ultrasonic flow meter 8 in the dilution air-inlet passage 9 being $Q_D(t)$, and a total suction flow rate by the constant-flow rate sampler CVS being $Q_M$ (constant), a flow rate $Q_E(t)$ of an exhaust gas from the rolling stock 2 to be tested is determined by the following operation equation (3):

$$Q_E(t) = Q_A + Q_M - Q_D(t) \qquad (3)$$

On the other hand, provided that the concentration of an ingredient gas to be measured in the exhaust gas measured by the gas concentration analyzer 12 is $C_E(t)$, for the time being, the quantity (mass) M(t) of the ingredient gas in the exhaust gas is determined by the following operation equation (1):

$$M(t) = \rho \times C_E(t) \times Q_E(t) \qquad (1)$$

wherein $\rho$ defines the density of the ingredient gas to be measured.

However, as described in connection with the prior art and with reference to Figs. 4 and 5, the flow rate $Q_E(t)$ of the exhaust gas changes nearly instantaneously with the changing points of time $H_1$, $H_2$, $H_3$, $H_4$ of the driving modes without any delay, whereas the concentration $C_E(t)$ of the ingredient gas changes with a certain delay time $\tau_1$, $\tau_2$, $\tau_3$, $\tau_4$ relative to each changing point of time $H_1$, $H_2$, $H_3$, $H_4$ for the driving modes, respectively. Besides, said delay times $\tau_1$, $\tau_2$, $\tau_3$, $\tau_4$, are different for each driving mode and each ingredient gas with the general tendency that the data of the concentration $C_E(t)$ of the measured ingredient supplied by said gas concentration analyzer 12 in a real time are expanded or compressed relative to the time axis in each driving mode. Accordingly, in a method of the present invention, in order to make the flow rate $Q_E(t)$ of the exhaust gas used in said operation equation (1) to correspond with the concentration $C_E(t)$ of the ingredient gas used in said operation equation (1) at a ratio of 1 : 1 in each driving mode, the sampling of the dilution-air quantity $Q_D(t)$ measured by said ultrasonic flow meter 8 and the concentration $C_E(t)$ of the ingredient gas measured by said gas concentration analyzer 12 and the treatment of the sampling data are carried out as follows:

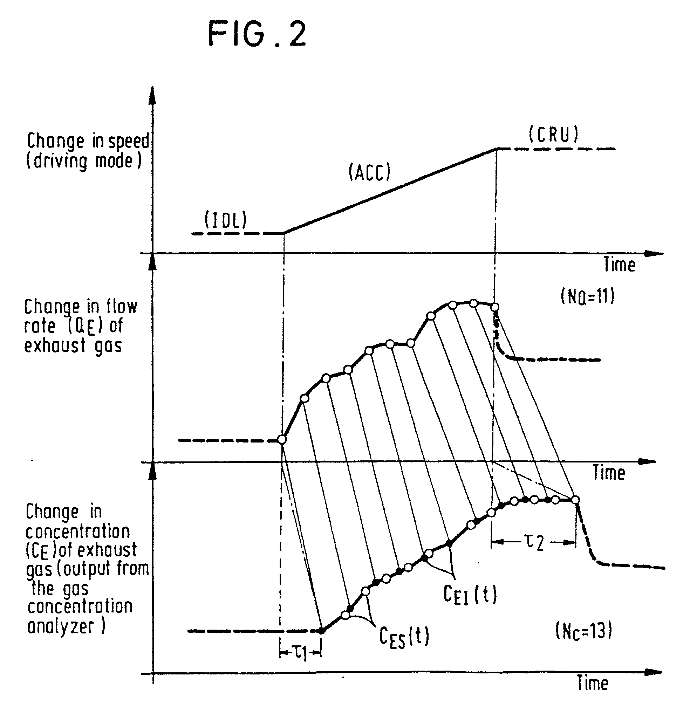

As shown in Fig. 2 (illustrating a case of an accelerating driving mode ACC), the sampling data obtained at the beginning of the measurement substantially without any delay relative to a changing-over point of time of each driving mode are used as the dilution-air quantity $Q_D(t)$ in said operation equation (3) as they are. This is expressed as a sampling result (shown by marks O) of the flow rate $Q_E(t)$ of the exhaust gas in Fig. 2. On the other hand, values obtained by delaying the beginning of the measurement of the sampling of the concentration of the ingredient gas in each driving mode by an appointed time relative to the changing-over point of time for each driving mode depend on the ingredient to be measured and the driving mode. In this embodiment, the delay time $\tau_1$ is preliminary determined by an experiment. The concentration $C_{E1}(t)$ of the ingredient gas (shown by marks ●) corresponding to the sampling data of said flow rate $Q_E(t)$ of the exhaust gas in the same phase and on the basis of the sampling data $C_{ES}(t)$ (shown by marks O) of the concentration of the ingredient gas are determined by an interpolation method. Then the concentration values $C_{E1}(t)$ are subjected to a concentration correction by a data-compression method or a data-expansion method based on the operation equation (2)

$$C_E(t) = C_{E1}(t) \times N_C/N_Q \qquad (2)$$

and the result is used as the concentration $C_E(t)$ of the ingredient to be measured and inserted in said operation equation (1).

In equation (2), $N_C$ and $N_Q$ correspond to the numbers of samplings of $C_E(t)$, $Q_E(t)$, respectively, in each driving mode preliminarily determined by an experiment and/or a calculation in each driving mode.

In other words, $N_Q$ and $N_C$ can be determined by a calculation of the following expressions, respectively, wherein the terms $\tau_{i+1}$, $\tau_i$ (i = 1, 2, 3) are to be obtained by an experiment previous to the measurement while the terms $H_{i+1}$, $H_i$ (i = 1, 2, 3) and $\Delta t$ (sampling time interval) are to be set at the measurement.

$$N_Q = (H_{i+1} - H_i)/\Delta t$$
$$N_C = \{(H_{i+1} - H_i) + (\tau_{i+1} - \tau_i)\}/\Delta t$$

Accordingly, it is possible to obtain $N_C/N_Q$ at once by a calculation of the following single expression.

$$N_C/N_Q = 1 + (\tau_{i+1} - \tau_i)/(H_{i+1} - H_i)$$

However, even though the measurement of the concentration $C_E(t)$ for each ingredient gas is carried out for the exhaust gas dehydrated at a specified temperature of $T^\circ C$ (for example $5^\circ C$), the measurement of the dilution-air quantity $Q_D(t)$ for determining the flow rate $Q_E(t)$ of the exhaust gas is carried out under the conditions that no hydration has been used, so that in this embodiment a value $Q_{ET}(t)$ obtained by subjecting the flow rate $Q_E(t)$ determined by said operation equation (3) to the humidity correction for the hydrating condition at the specified temperature of $T^\circ C$ is used as the flow rate $Q_E(t)$ of the exhaust gas in said operation equation (1).

That is to say, the flow rate $Q_{ET}(t)$ under the hydrated condition at the specified temperature of $T^\circ C$ is determined by the following operation equation (4) in which the flow rate $Q_E(t)$ determined by said operation equation (3), a CO-concentration $a(t)$, a $CO_2$-concentration $b(t)$ and a HC-concentration $c(t)$ and a $H_2O$-concentration $d(t)$ and a CH (carbon-hydrogen) ratio $y$ of a fuel used at said specified temperature of $T^\circ C$ are used.

$$\left. \begin{array}{rl} Q_{ET}(t) & = Q_E(t)\ [1 + d(t) - X(t)] \\[2mm] X(t) & = \dfrac{y/2\ [a(t) + b(t) + 3c(t)] - 4c(t)}{a(t)/3.8b(t) + 1} \end{array} \right] \quad (4)$$

Summarizing the above description, a modal mass analysis method of an exhaust gas from a motorcar according to the present invention uses the equation (1) ($M(t) = \rho \times C_E(t) \times Q_{ET}(t)$) as the fundamental operation equation and the said equation (3), the equation (2) and the like as auxiliary operation equations.

In the following, the principle of the measurement of the dilution-air quantity $Q_D(t)$ by means of the ultrasonic flow meter 8 disposed in said dilution-air inlet passage 9 will be described with reference to Fig. 3.

The ultrasonic flow meter 8 is fundamentally used for measuring a flow rate and comprises two sets of ultrasonic transmitter/receivers 8A, 8B arranged opposite to each other at an inclination angle of $\theta$ to the dilution-air inlet passage 9, so that it is hardly influenced by a pressure loss.

Provided that the distance between both ultrasonic transmitter/receivers 8A, 8B is L, the propagation speed of an ultrasonic wave from the ultrasonic transmitter/receiver 8A to the ultrasonic transmitter/receiver 8B being $t_1$, the propagation speed of an ultrasonic wave from the ultrasonic transmitter/receiver 8B to the ultrasonic transmitter/receiver 8A being $t_2$, the angle between the central axis of the dilution-air inlet passage 9 and an ultrasonic wave propagation axis of both ultrasonic transmitter/receiver 8A, 8B being $\theta$, the average flow rate on a line between the ultrasonic transmitter/receiver 8A, 8B in the dilution-air inlet passage 9 being V, and the propagation speed of an ultrasonic wave in a stationary gas being $t_0$, the following equations can be established:

$t_1 = L/(t_0 + V\cos\theta)$

$t_2 = L/(t_0 - V\cos\theta)$

From this results:

$$V = \frac{L}{2\cos\theta}\left(\frac{1}{t_1} - \frac{1}{t_2}\right)$$

Accordingly, the average flow rate $V_s$ on a sectional area of the dilution-air inlet passage 9 is expressed by the following (well known Prandtl's) equation:

$$V_S = V \times \frac{1}{1 + 0.01 \sqrt{6.25 + 431 Re^{-0.237}}}$$

(Re: Reynolds number)

Assuming the sectional area of the dilution-air inlet passage 9 to be S, the temperature of a liquid under the standard conditions being $T_0$ (e.g. 25° C), the pressure of the liquid under standard conditions being $P_0$ (e.g. 1 atm), the temperature of the liquid under operating conditions being T, and the pressure of the liquid under operating conditions being P, said dilution-air quantity $Q_D(t)$ at the standard condition can be determined by the following operation equation:

$$Q_D(t) = V_S \times S \times \frac{T_0 \times P}{T \times P_0}$$

As can be taken from the above detailed description, according to the modal mass analysis method of an exhaust gas from a motorcar of the present invention, said flow rate $Q_E(t)$ of the exhaust gas used in the operation equation (1) for determining the momentary quantity of the ingredient gas to be measured is adapted to correspond to said concentration $C_E(t)$ of the ingredient used in the operation equation (1) at a ratio of 1 : 1 in phase relation and number by setting a delay time for the beginning of the sampling of the data of the ingredient gas and subjecting the measured sampling data $\dot{C}_{ES}(t)$ to a relatively simple operational correction using an interpolation method including a data-compression method or a data-expansion method by said operation equation (2), so that the quantity M(t) of the exhausted ingredient can be momentarily determined with very high accuracy by said operation equation (1), whereby also the quantity M of the average exhausted ingredient gas in each driving mode can be determined in remarkably high accuracy on the basis of the operation result. Thus, various kinds of performance of a motorcar during a transient driving can be investigated in remarkably more significant details and higher accuracy in comparison with conventional methods. In addition, the operational correction of the concentration $C_E(t)$ of the ingredient gas to be measured, according to the present invention, is based on a relatively simple method. This results in various kinds of superior effects, e.g. in that a calculating device of a relatively small capacity is sufficient for carrying out the method, and the over all construction costs for modal mass analysis systems for determining the various components in exhaust gases of motorcars with superior accuracy become remarkably lower in comparison to prior art systems.

**Claims**

1. A modal mass analysis method for exhaust gases from motorcars based on the procedure of
   - measuring a flow rate $Q_E(t)$ of an exhaust gas exhausted from a rolling stock (2) tested under driving simulation conditions on the basis of a predetermined driving mode-changing over sequence in an appointed sampling time,
   - measuring the concentration $C_E(t)$ of an ingredient gas in the same appointed sampling time as in a case of said flow rate $Q_E(t)$ of the exhaust gas, and
   - determining the quantity M(t) of said ingredient to be measured in the exhaust gas for each driving mode by the operation equation

   $M(t) = p \times C_E(t) \times Q_E(t)$     (1)

   wherein p is the density of an ingredient to be measured, **characterized in that**
   - in order to make the flow rate $Q_E(t)$ of the exhaust gas used in said operation equation (1) to correspond with the concentration $C_E(t)$ of the ingredient gas as used in said operation equation (1) to a ratio of 1:1 for each driving mode, the sampling data of the flow rate $Q_E(t)$ of the exhaust gas obtained at the beginning of the measurement substantially without any delay relative to a changing-over point of time of each driving mode are used as said flow rate $Q_E(t)$ in said

7

EP 0 230 673 B1

operation equation (1) as they are, while values obtained by delaying the beginning time of the measurement of the sampling of the concentration of the ingredient gas in each driving mode by an appointed time relative to a changing-over point of time for each driving mode are derived depending on the ingredient gas and the driving mode, and

- the concentration $C_{E1}(t)$ of the ingredient gas corresponding to the sampling data of said flow rate $Q_E(t)$ of the exhaust gas in the same phase is determined on the basis of the sampling data $C_{ES}(t)$ of the concentration of the ingredient gas by interpolation, and then

- a concentration value $C_{E1}(t)$ is subjected to a concentration correction by data-compression or data-expansion based on the following operation equation

$$C_E(t) = C_{E1}(t) \times N_C/N_Q, \qquad (2)$$

wherein $N_C$, $N_Q$ correspond to the numbers of samplings of $C_E(t)$, $Q_E(t)$, respectively, in each driving mode and preliminarily determined, and

- the resulting concentration $C_E(t)$ of the ingredient gas is used for determining the ingredient quantity $M(t)$ according to the operation equation (1).

## Revendications

1. Procédé d'analyse de masse modale de gaz d'échappement provenant de véhicules à moteur comportant les étapes consistant à

- mesurer un débit $Q_E(t)$ d'un gaz d'échappement émis par un véhicule en déplacement (2) essayé dans des conditions de conduite simulée sur la base d'une séquence de changement de mode de conduite prédéterminée durant une période d'échantillonnage déterminée,

- mesurer la concentration $C_E(t)$ d'un gaz constituant durant la même période d'échantillonnage déterminée que dans le cas dudit débit $Q_E(t)$ du gaz d'échappement, et

- déterminer la quantité $M(t)$ dudit gaz constituant à mesurer dans le gaz d'échappement pour chaque mode de conduite par l'équation

$$M(t) = p \times C_E(t) \times Q_E(t) \qquad (1)$$

dans laquelle p est la densité d'un gaz constituant à mesurer, caractérisé en ce que

- afin de faire correspondre le débit $Q_E(t)$ du gaz d'échappement utilisé dans ladite équation (1) à la concentration $C_E(t)$ du gaz constituant telle qu'utilisée dans ladite équation (1) à un rapport de 1:1 pour chaque mode de conduite, les données d'échantillonnage du débit $Q_E(t)$ du gaz d'échappement obtenues au début de la mesure pratiquement sans délai par rapport à un instant de changement de chaque mode de conduite sont utilisées en tant que débit $Q_E(t)$ dans ladite équation (1) telles quelles, tandis que des valeurs obtenues en retardant l'instant du début de la mesure de l'échantillonnage de la concentration du gaz constituant dans chaque mode de conduite d'un temps déterminé par rapport à un instant de changement de chaque mode de conduite sont extraites en fonction du gaz constituant et du mode de conduite,et

- la concentration $C_E(t)$ du gaz constituant correspondant aux données d'échantillonnage dudit débit $Q_E(t)$ du gaz d'échappement dans la même phase est déterminée en fonction des données d'échantillonnage $C_{ES}(t)$ de la concentration du gaz constituant par interpolation, et ensuite

- une valeur de concentration $C_{E1}(t)$ est soumise à une correction de concentration par compression de données ou expansion de données en fonction de l'équation suivante

$$C_E(t) = C_{E1}(t) \times N_C/N_Q \qquad (2)$$

dans laquelle $N_C$, $N_Q$ correspondent aux nombres d'échantillonnages de $C_E(t)$, $Q_E(t)$, respectivement, dans chaque mode de conduite et préalablement déterminés, et

- la concentration résultante $C_E(t)$ du gaz constituant est utilisée pour déterminer la quantité de gaz constituant $M(t)$ selon l'équation (1).

## Patentansprüche

1. Verfahren zur modalen Masseanalyse der Abgase von Motorfahrzeugen mit folgenden Verfahrensschritten:

8

- es wird die Strömungsrate $Q_E(t)$ des Abgases eines Fahrzeugs (2) unter simulierten Fahrbedingungen für eine festgelegte Folge von Fahrbetriebswechseln während einer vorgegebenen Probeentnahmezeit gemessen,
- es wird die Konzentration $C_E(t)$ eines Gasbestandteils während derselben festgelegten Probeentnahmezeit wie für den Fall der Messung der Strömungsrate $Q_E(t)$ des Abgases gemessen und
- es wird die Menge $M(t)$ des in dem Abgas zu messenden Gasbestandteils für jeden Fahrmodus entsprechend der Operationsgleichung

$$M(t) = p \times C_E(t) \times Q_E(t) \qquad (1)$$

bestimmt, wobei p die Dichte eines zu messenden Gasbestandteils bezeichnet, **dadurch gekennzeichnet, daß**

- zum Einstellen des in die Operationsgleichung (1) eingesetzten Werts der Strömungsrate $Q_E(t)$ des Abgases in Anpassung auf den ebenfalls in die Operationsgleichung (1) einzusetztenden Konzentrationswert $C_E(t)$ auf ein Verhältnis von 1 : 1 für jeden Fahrmodus die zu Beginn des Meßvorgangs im wesentlichen ohne Verzögerung mit Bezug auf einen Umschaltzeitpunkt für jeden Fahrmodus erhaltenen Probedaten der Strömungsrate $Q_E(t)$ als Strömungsratenwert $Q_E(t)$ unverändert in die Operationsgleichung (1) eingesetzt werden, während Werte, die durch verzögerten Meßbeginn um eine festgelegte Zeitspanne relativ zu einem Umschaltzeitpunkt für Konzentrationsproben des Gasbestandteils für jeden Fahrmodus gemessen werden, in Abhängigkeit vom Gasbestandteil für den jeweiligen Fahrmodus erhalten werden,
- die Konzentration $C_{E1}(t)$ des den Probendaten der Strömungsrate $Q_E(t)$ des Abgases in derselben Phase entsprechenden Gasbestandteils auf der Grundlage der Probendaten $C_{ES}(t)$ der Konzentration des Gasbestandteils durch Interpolation bestimmt wird und anschließend
- ein so erhaltener Konzentrationswert $C_{E1}(t)$ einer Konzentrationswertkorrektur durch Datenkompression oder Datenexpansion unterworfen wird auf der Grundlage der Operationsgleichung

$$C_E(t) = C_{E1}(t) \times N_C/N \qquad (2)$$

worin die Werte $N_C$, $N_Q$ der Anzahl der Proben von $C_E(t)$ bzw. $Q_E(t)$ in jedem Fahrmodus entsprechen und zuvor bestimmt worden sind, und daß

- der sich ergebene Konzentrationswert $C_E(t)$ des Gasbestandteils verwendet wird um die Bestandteilsmenge $M(t)$ entsprechend der Operationsgleichung (1) zu bestimmen.

# FIG.1

# FIG.3

# FIG.2

EP 0 230 673 B1

**FIG.4**

Driving mode

Flow rate ($Q_E$) of exhaust gas

Concentration ($C_E$) of exhaust gas

**FIG.5**

Change in speed (driving mode)

Change in flow rate ($Q_E$) of exhaust gas

Change in concentration ($C_E$) of exhaust gas (output from the gas concentration analyzer)

12